# EUROPEAN PATENT APPLICATION

(11) **EP 4 475 392 A1**
(43) Date of publication of application: **11.12.2024**
(21) Application number: 23780608.8
(22) Date of filing: 28.03.2023
(51) Int. Cl.: H02K 1/18

(54) **AIR CONDITIONING DEVICE ELECTRIC MOTOR**

(30) Priority: 30.03.2022 JP 2022057371
(71) Applicant: DAIKIN INDUSTRIES, LTD., Osaka-shi, Osaka 530-0001 (JP); Nature Architects Inc., Tokyo 103-0011 (JP)
(72) Inventor: NAKA, Shojiro, Osaka-shi, Osaka 530-0001 (JP); HIRANO, Masaki, Osaka-shi, Osaka 530-0001 (JP); YAMAGIWA, Akio, Osaka-shi, Osaka 530-0001 (JP); SUTO, Kai, Tokyo 103-0011 (JP)
(74) Representative: Goddar, Heinz J.
(86) International application number: PCT/JP2023/012672
(87) International publication number: WO 2023/190599

(57) **Abstract**

An electric motor (30) for an air conditioner includes: a rotor (40) configured to rotate freely about a rotary shaft; and a stator core (32, 32a, 32b, 32c, 32d, 32e, 32f, 32g, 32h, 32i) arranged outside the rotor (40). The stator core (32, 32a, 32b, 32c, 32d, 32e, 32f, 32g, 32h, 32i) includes: an inner yoke portion (41) in an annular shape; a tooth portion (35) extending inward from the inner yoke portion (41) in a radial direction; an outer yoke portion (43) in an annular shape arranged outward of the inner yoke portion (41) in the radial direction; a plurality of beam portions (42) extending in a circumferential direction between the inner yoke portion (41) and the outer yoke portion (43); an inner joint portion (44) configured to join the inner yoke portion (41) and each of the beam portions (42) in the radial direction; and an outer joint portion (45) configured to join the outer yoke portion (43) and each of the beam portions (42) in the radial direction.

## Description

### TECHNICAL FIELD

The present disclosure relates to an electric motor for an air conditioner.

### BACKGROUND ART

Electric motors are used in various fields such as an air conditioner. Since the electric motor can be a vibration source, study has been conducted on a technique for reducing vibration. For example, Patent Document 1 discloses a motor stator blank having a yoke portion, in which several axial grooves are provided along a circumferential direction in the yoke portion and are empty or filled with a damping medium. It is described that this configuration weakens excitation of a stator core caused by vibration generated on the stator and reduces, e.g., vibration.

### CITATION LIST

### PATENT DOCUMENT

Patent Document 1: Japanese Unexamined Patent Publication No. 2021-065082

### SUMMARY OF THE INVENTION

### TECHNICAL PROBLEM

In the technique of Patent Document 1, the groove shape is substantially triangular and long in the radial direction, and as a result, a magnetic path contributing to the rotational torque of the motor decreases.

An objective of an electric motor for an air conditioner of the present disclosure is to reduce vibration propagating from a motor stator to a casing housing the motor stator, while reducing a decrease in a magnetic path contributing to the rotational torque of the motor.

### SOLUTION TO THE PROBLEM

A first aspect of the present disclosure is directed to an electric motor (30) for an air conditioner. The electric motor (30) includes: a rotor (40) configured to rotate freely about a rotary shaft; and a stator core (32, 32a, 32b, 32c, 32d, 32e, 32f, 32g, 32h, 32i) arranged outside the rotor (40). The stator core (32, 32a, 32b, 32c, 32d, 32e, 32f, 32g, 32h, 32i) includes: an inner yoke portion (41) in an annular shape; a tooth portion (35) extending inward from the inner yoke portion (41) in a radial direction; an outer yoke portion (43) in an annular shape arranged outward of the inner yoke portion (41) in the radial direction; a plurality of beam portions (42) extending in a circumferential direction between the inner yoke portion (41) and the outer yoke portion (43); an inner joint portion (44) configured to join the inner yoke portion (41) and each of the beam portions (42) in the radial direction; and an outer joint portion (45) configured to join the outer yoke portion (43) and each of the beam portions (42) in the radial direction.

According to the first aspect, it is possible to reduce the propagation of vibration between the inner yoke portion (41) and the outer yoke portion (43).

A second aspect of the present disclosure is an embodiment of the first aspect. In the second aspect, each of the beam portions (42) is provided with the inner joint portion (44) at one end in the circumferential direction, and the outer joint portion (45) at the other end.

According to the second aspect, it is possible to implement the coupling between the inner yoke portion (41) and the outer yoke portion (43) using the beam portions (42) serving as coupling portions.

A third aspect of the present disclosure is an embodiment of the first aspect. In the third aspect, each of the beam portions (42) is provided with the inner joint portion (44) at each end in the circumferential direction and the outer joint portion (45) at a different position, or is provided with the joint portion (45) at each end in the circumferential direction and the inner joint portion (44) at the different position.

According to the third aspect, it is possible to implement the coupling between the inner yoke portion (41) and the outer yoke portion (43) using the beam portions (42) serving as coupling portions.

A fourth aspect of the present disclosure is an embodiment of the third aspect. In the fourth aspect, the outer joint portion (45) or the inner joint portion (44) at the different position is provided at a middle portion of each of the beam portions (42) in the circumferential direction.

According to the fourth aspect, the effect of reducing the propagation of vibration can be exhibited significantly.

A fifth aspect of the present disclosure is an embodiment of any one of the first to fourth aspects. In the fifth aspect, an angle formed by both ends of one of the beam portions (42) in the circumferential direction with respect to a center of the stator core (32, 32a, 32b, 32c, 32d, 32e, 32f, 32g, 32h, 32i) is 50° or more.

According to the fifth aspect, the effect of reducing the propagation of vibration can be exhibited significantly.

A sixth aspect of the present disclosure is an embodiment of any one of the first to fifth aspects. In the sixth aspect, two, three, or six beam portions (42) are provided, and the beam portions (42) have a same length.

According to the sixth aspect, the effect of reducing the propagation of vibration can be exhibited significantly.

A seventh aspect of the present disclosure is an embodiment of any one of the first to sixth aspects. In the seventh aspect, each of the beam portions (42) includes, between the inner joint portion (44) and the outer joint portion (45), bent areas (42a) each made of a first bent portion (53) and a second bent portion (54) arranged in the circumferential direction, the first bent portion (53) being raised with respect to the inner yoke portion (41), the second bent portion (54) being recessed with respect to the inner yoke portion (41).

According to the seventh aspect, the bent area (42a) constitutes a spring structure, which increases torsional rigidity and reduces vibration in the axial direction.

An eighth aspect of the present disclosure is an embodiment of any one of the first to seventh aspects. In the eighth aspect, each of the beam portions (42) includes a plurality of arc-shaped portions.

According to the eighth aspect, the beam portion (42) may be made of a plurality of arc-shaped portions as an example configuration.

A ninth aspect of the present disclosure is directed to a compressor (10) which includes the electric motor (30) of any one of the first to eighth aspects.

According to the ninth aspect, it is possible to achieve the compressor (10) with reduced vibration.

A tenth aspect of the present disclosure is directed to a refrigeration apparatus (1) which includes the compressor (10) of the ninth aspect.

According to the tenth aspect, it is possible to achieve the refrigeration apparatus (1) with reduced vibration.

### BRIEF DESCRIPTION OF THE DRAWINGS

FIG. 1 is a schematic configuration diagram of a refrigeration apparatus according to an embodiment.
FIG. 2 is a longitudinal cross-sectional view corresponding to a section parallel with the axial direction of a compressor according to the embodiment.
FIG. 3 is a cross-sectional view corresponding to a section perpendicular to the axial direction, for describing a stator core of an electric motor according to the embodiment.
FIG. 4 is an enlarged schematic view of a part IV shown in FIG. 3.
FIG. 5 is a diagram showing a result of analysis of a reaction force generated, due to vibration, in fixed portions of stator cores of the present disclosure and a comparative example.
FIG. 6 is a lateral cross-sectional view for describing a stator core of an electric motor according to an embodiment.
FIG. 7 is a lateral cross-sectional view for describing a stator core of an electric motor according to an embodiment.
FIG. 8 is an enlarged schematic view of a part VIII shown in FIG. 7.
FIG. 9 is an enlarged schematic view of a part IX shown in FIG. 7.
FIG. 10 is a lateral cross-sectional view for describing a stator core of an electric motor according to an embodiment.
FIG. 11 is a lateral cross-sectional view for describing a stator core of an electric motor according to an embodiment.
FIG. 12 is a lateral cross-sectional view for describing a stator core of an electric motor according to an embodiment.
FIG. 13 is a lateral cross-sectional view for describing a stator core of an electric motor according to an embodiment.
FIG. 14 is a lateral cross-sectional view for describing a stator core of an electric motor according to an embodiment.
FIG. 15 is a lateral cross-sectional view for describing a stator core of an electric motor according to an embodiment.
FIG. 16 is a lateral cross-sectional view for describing a stator core of an electric motor according to an embodiment.
FIG. 17 is an enlarged view of a part XVII shown in FIG. 16.

### DESCRIPTION OF EMBODIMENTS

Embodiments of the present disclosure will be described in detail below with reference to the drawings. The present disclosure is not limited to the embodiments shown below, and various changes can be made within the scope without departing from the technical concept of the present disclosure. Each of the drawings is intended to illustrate the present disclosure conceptually, and dimensions, ratios, or numbers may be exaggerated or simplified as necessary for the sake of ease of understanding.

A compressor (10) of the present disclosure is provided for a refrigeration apparatus (1).

### (1) Overview of Refrigeration Apparatus

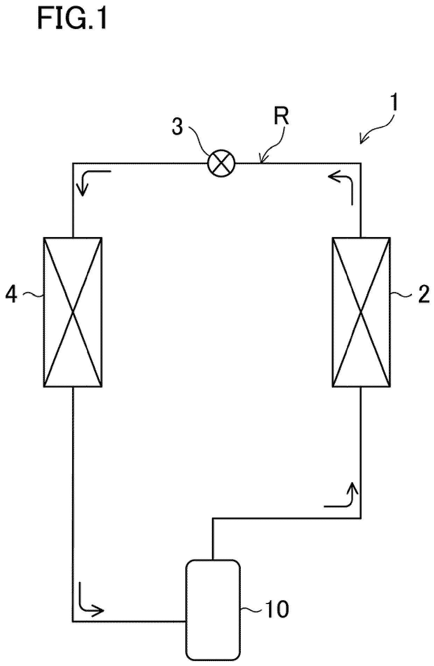

The refrigeration apparatus (1) illustrated in FIG. 1 includes the compressor (10) of the present disclosure. The refrigeration apparatus (1) includes a refrigerant circuit (R) filled with refrigerant. The refrigerant circuit (R) has the compressor (10), a radiator (2), a decompression mechanism (3), and an evaporator (4). The decompression mechanism (3) is an expansion valve. The refrigerant circuit (R) performs a vapor compression refrigeration cycle.

In the refrigeration cycle, the refrigerant compressed by the compressor (10) dissipates heat to air in the radiator (2). The refrigerant having dissipated heat is decompressed by the decompression mechanism (3) and is evaporated in the evaporator (4). The evaporated refrigerant is sucked into the compressor (10).

The refrigeration apparatus (1) is an air conditioner. The air conditioner may be any of a cooling-only apparatus, a heating-only apparatus, or an air conditioner switchable between cooling and heating. In this case, the air conditioner has a switching mechanism (e.g., a four-way switching valve) configured to switch the direction of circulation of the refrigerant. The refrigeration apparatus (1) may be a water heater, a chiller unit, or a cooling apparatus configured to cool air in an internal space. The cooling apparatus cools the air in a refrigerator, a freezer, or a container, for example. The expansion mechanism is an electronic expansion valve, a temperature-sensitive expansion valve, an expander, or a capillary tube.

### (2) Compressor

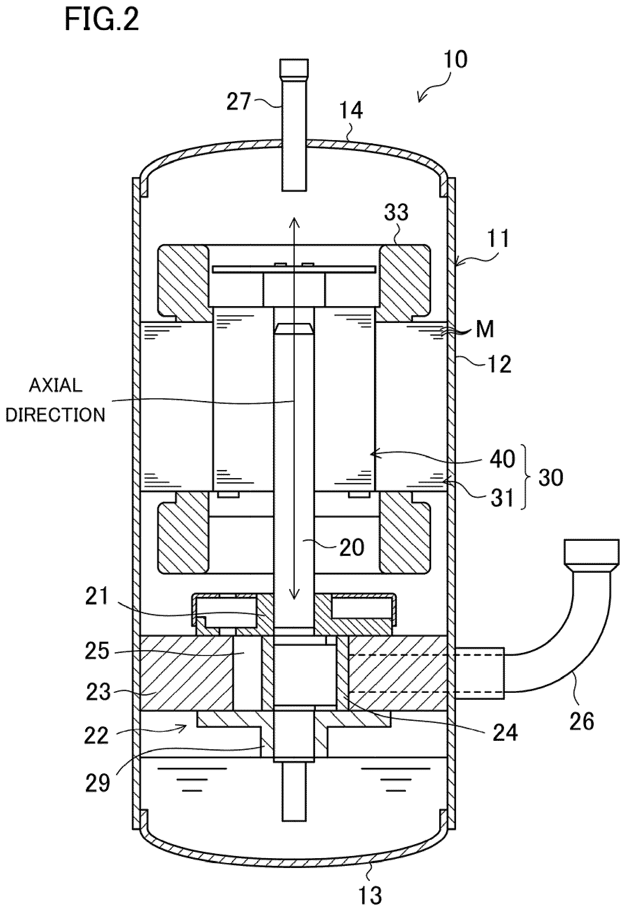

As illustrated in FIG. 2, the compressor (10) has a casing (11), an electric motor (30), a drive shaft (20), and a compression mechanism (22). The compressor (10) is a rotary compressor. Precisely, the compressor (10) is a compressor of an oscillating piston type. The compressor (10) may be a scroll compressor, a screw compressor, or a turbo compressor.

### (2-1) Casing

The casing (11) houses the electric motor (30), the drive shaft (20), and the compression mechanism (22). The casing (11) is a hermetic container. The inside of the casing (11) is filled with high-pressure refrigerant discharged from the compression mechanism (22).

The casing (11) is made of a metal material. The casing (11) has a barrel (12), a bottom portion (13), and a top portion (14). The barrel (12) is a tubular metal member. At each of both ends of the barrel (12) in the axial direction, an opening is formed. In this example, the axial direction of the barrel (12) corresponds to the vertical direction. The bottom portion (13) closes the lower opening of the barrel (12). The top portion (14) closes the upper opening of the barrel (12).

### (2-2) Electric Motor

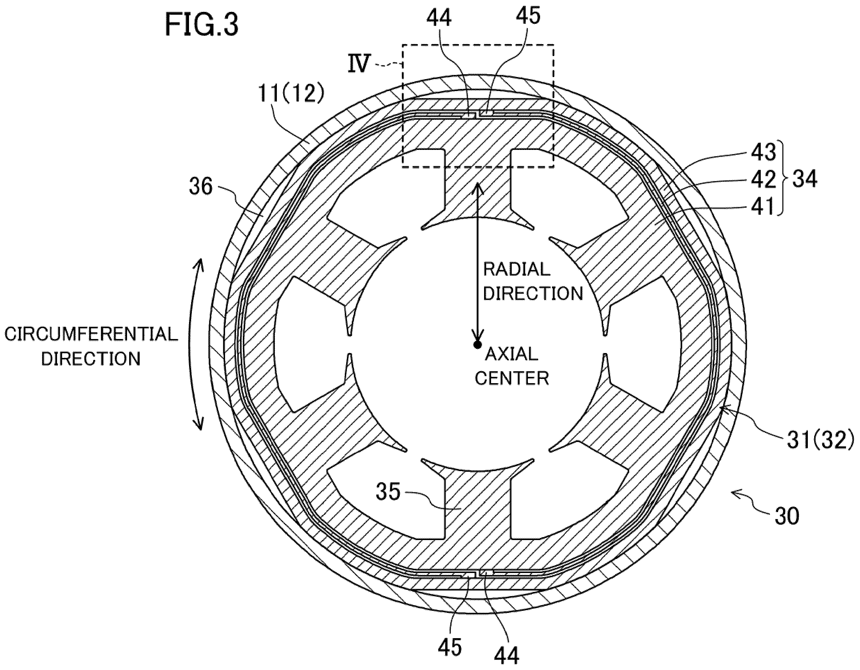

The electric motor (30) illustrated in FIGS. 2 and 3 is an example of a rotating electric machine. The electric motor (30) is disposed above the compression mechanism (22). The operation frequency of the electric motor (30) is controlled by an inverter device. In other words, the compressor (10) is an inverter compressor having a variable operation frequency.

The electric motor (30) has a stator (31) and a rotor (40). The stator (31) is supported by the barrel (12) of the casing (11). The stator (31) has a stator core (32) and a coil (33) wound around the stator core (32). The stator core (32) forms a core of the present disclosure. The stator core (32) includes electrical steel sheets (M) stacked in the axial direction. As illustrated in FIG. 3, the stator core (32) has an annular yoke portion (34) and a plurality of (six in this example) tooth portions (35) extending inward in the radial direction from the inner peripheral surface of the yoke portion (34). The yoke portion (34) includes a plurality of portions, and details of the stator core (32) including this point will be described later.

The outer peripheral surface of the yoke portion (34) has a plurality of (six in this example) core cuts (36). The core cuts (36) are grooves extending in the axial direction of the stator core (32). Each core cut (36) is formed at a position on the opposite side of the yoke portion (34) from the tooth portions (35).

The rotor (40) is disposed inside the stator core (32). The drive shaft (20) is fixed in the axial center of the rotor (40). A plurality of permanent magnets (not shown) are embedded in the rotor (40).

An annular gap is formed between the tooth portions (35) of the stator (31) and the rotor (40) in a lateral cross-sectional view.

### (2-3) Drive Shaft

The drive shaft (20) extends vertically along the axial center of the casing (11). The drive shaft (20) is rotationally driven by the electric motor (30). The drive shaft (20) is rotatably supported by a bearing (21).

### (2-4) Compression Mechanism

The compression mechanism (22) has a cylinder (23) and a piston (24) provided inside the cylinder (23). A cylinder chamber (25) is formed between the inner peripheral surface of the cylinder (23) and the outer peripheral surface of the piston (24). In the cylinder chamber (25), fluid is compressed by the piston (24) driven by the drive shaft (20).

### (2-5) Suction Pipe and Discharge Pipe

The compressor (10) has a suction pipe (26) and a discharge pipe (27). The suction pipe (26) penetrates the barrel (12) in the radial direction, and communicates with the cylinder chamber (25). Low-pressure refrigerant in the refrigerant circuit (R) is sucked into the cylinder chamber (25) through the suction pipe (26). The discharge pipe (27) penetrates the top portion (14) in the axial direction, and communicates with the internal space of the casing (11). The refrigerant compressed in the compression mechanism (22) flows through, e.g., the core cuts (36) and gap of the electric motor (30), and is then sent to the refrigerant circuit (R) through the discharge pipe (27).

### (3) Details of Stator Core

The details of the stator core (32) will be described with reference to FIGS. 2 to 5. In the following description, the terms "axial direction," "circumferential direction," and "radial direction" mean the axial direction, circumferential direction, and radial direction of the stator (31), respectively, unless otherwise specified. In this example, the axial direction of the stator (31) corresponds to the axial direction of the drive shaft (20) as illustrated in FIG. 2.

The stator core (32) may be configured by stacking the plurality of electrical steel sheets from one end to the other end in the axial direction.

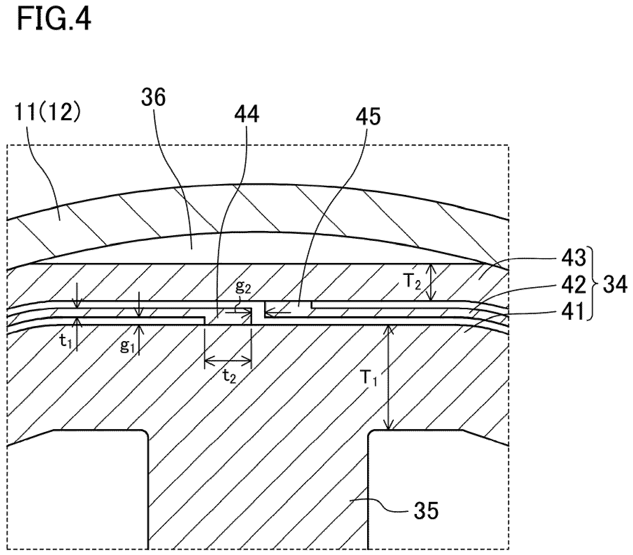

FIG. 4 is an enlarged view of a part IV surrounded by the broken line in FIG. 3 showing a first configuration example of the stator core (32). The yoke portion (34) of the stator core (32) includes an annular inner yoke portion (41), an annular outer yoke portion (43) disposed outside the inner yoke portion (41) in the radial direction, and a plurality of beam portions (42) extending in the circumferential direction between the inner yoke portion (41) and the outer yoke portion (43). The inner yoke portion (41) and the beam portions (42) are joined to each other in the radial direction by inner joint portions (44). The outer yoke portion (43) and the beam portions (42) are joined to each other in the radial direction by outer joint portions (45). In this manner, the inner yoke portion (41) and the outer yoke portion (43) are integrated by the beam portions (42) as coupling portions interposed therebetween. Dimensions such as t₁ and T₂ in FIG. 4 will be described later.

The example in FIG. 3 provides two beam portions (42) with the same length and in a substantially arcuate shape, which form together a substantial ring. Each of the beam portions (42) includes an inner joint portion (44) at one end in the circumferential direction, and an outer joint portion (45) at the other end. Referring to FIG. 3, one of the two beam portions (42) is joined to the outer yoke portion (43) at an upper portion (i.e., the area shown in FIG. 4 in an enlarged manner) by the outer joint portion (45), extends clockwise in the circumferential direction, and joined to the inner yoke portion (41) at a lower portion (i.e., the opposite side with respect to the axial center) by the inner joint portion (44). The other beam portion (42) is joined to the outer yoke portion (43) at the lower portion by the outer joint portion (45), extends clockwise in the circumferential direction, and is joined to the inner yoke portion (41) at the upper portion by the inner joint portion (44). In this manner, the two beam portions (42) are provided symmetrically with respect to the axial center. The other parts of each beam portion (42) are not joined to any of the inner yoke portion (41) or the outer yoke portion (43).

As will be described in detail later, the number and length of the beam portions (42), the arrangement of the inner joint portion (44) and the outer joint portion (45), and the like are shown as examples in FIG. 3. Various configurations may be employed.

The outer yoke portion (43) of such a stator core (32) is fixed to the casing (11) by shrink fitting or any other suitable methods. Thus, stress is applied from the casing (11) to the yoke portion (34). However, such stress is applied to the outer yoke portion (43), and is not applied to the inner yoke portion (41) joined to the outer yoke portion (43) by the beam portions (42). This reduces magnetic deterioration in the inner yoke portion (41) and the tooth portions (35) due to the stress, and reduces an increase in an iron loss due to the magnetic deterioration.

Further, according to the stator core (32) described above, the configuration in which the outer yoke portion (43) and the inner yoke portion (41) are joined to each other by the beam portions (42) can reduce the propagation of vibration generated at the inner yoke portion (41) to the outer yoke portion (43). As a result, vibration of the casing (11) and therefore vibration of the compressor (10) can be reduced.

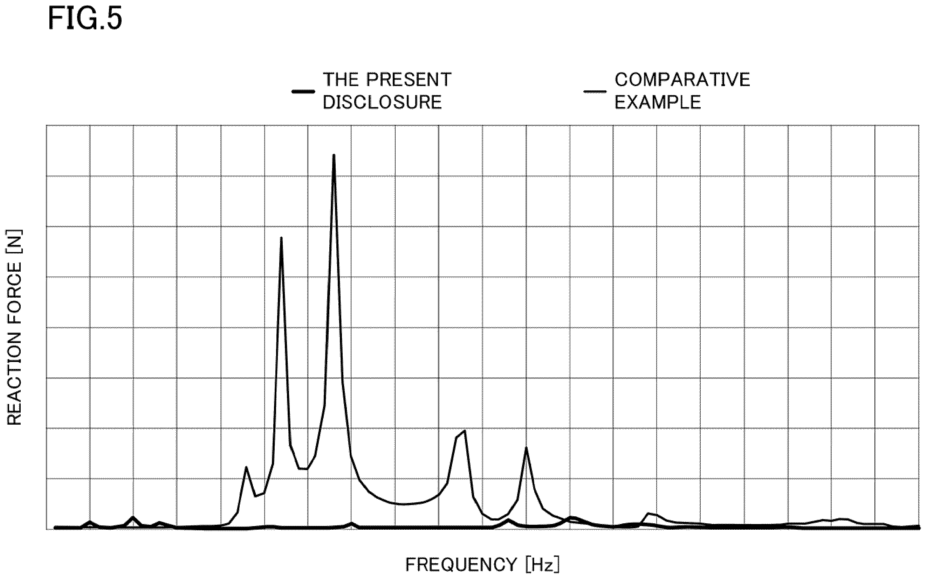

This configuration is shown in FIG. 5. FIG. 5 shows the result of analysis of the reaction force generated at the fixed portion by the vibration occurring at the tooth portions (35) in the case where the casing (11) housing the stator core (32) is fixed to another member (e.g., the housing of the refrigeration apparatus (1)) as shown in FIG. 3. The thick line indicates the case of the stator core (32) of the present disclosure, an example of which is shown in FIG. 3. The thin line indicates the case of a stator core having a single yoke, not a structure divided into the inner yoke portion (41) and the outer yoke portion (43).

The reaction force applied to the fixed portion depends on the frequency of the vibration. In the case of the comparative example, large peaks of the reaction force occur in several frequency ranges. On the other hand, in the case of the present disclosure, the reaction force is significantly small in a wide frequency range and is one tenth, or even less than that, at the peaks of the comparative example. There is a frequency range in which the reaction force is larger in the present disclosure than in the comparative example. However, even in that case, the reaction force itself is small, which is less problematic in view of reducing vibration.

When the motor rotates, the tooth portions (35) are displaced. The magnitude of this displacement also depends on the frequency, and a larger displacement is more likely to occur in a specific frequency range in the present disclosure than in the comparative example. However, at such a moment as well, it is possible to reduce the magnitude of the displacement to an extent that allows the avoidance of deterioration of the electromagnetic performance.

The advantage of reducing vibration by the stator core (32) of the present disclosure depends on the dimensions or other characteristics of the components. This point will be described with reference to FIG. 4. FIG. 4 shows the dimensions of each component of the stator core (32). The stator core (32) has a diameter (a dimension of a portion without the core cut (36)) of about 110 mm as an example.

Specifically, a beam thickness ti is the thickness (i.e., the dimension in the radial direction) of the beam portion (42), a joint width t₂ is the dimension of the inner joint portion (44) in the circumferential direction, a beam-yoke clearance g₁ is the width of the clearance between the inner yoke portion (41) and the beam portion (42), an inter-joint distance g₂ is the width of the clearance between the inner joint portion (44) and the outer joint portion (45) in the circumferential direction, an inner yoke thickness T₁ is the thickness of the inner yoke portion (41), and an outer yoke thickness T₂ is the thickness of the outer yoke portion (43). Here, t₂ may be equal to the dimension of the outer joint portion (45) in the circumferential direction, and g₁ may be equal to the width of the clearance between the outer yoke portion (43) and the beam portion (42).

The damping performance that reduces the propagation of the vibration generated at the inner yoke portion (41) is largely influenced by the beam thickness ti and the inner yoke thickness T₁. The damping performance tends to be enhanced by reducing the beam thickness ti. The beam thickness ti is preferably about 0.6 mm or more and about 1.0 mm or less. The damping performance tends to be enhanced by increasing the inner yoke thickness T₁. The inner yoke thickness T₁ is preferably about 6 mm or more and about 7 mm or less.

The drop impact stress also tends to be reduced by reducing the beam thickness ti. The drop impact stress refers to the stress generated in the axial direction of the stator core (32) when the compressor (10) is dropped and collides with a floor surface or the like. This stress may cause damage such as displacement of the electric motor (30) attached to the compressor (10). The reduction in the drop impact stress thus contributes to the improvement in the reliability of the compressor (10) particularly in transportation.

The joint width t₂ is preferably about 1 mm or more and about 3 mm or less. The beam-yoke clearance g₁ is preferably about 0.4 mm or more and about 0.6 mm or less. The inter-joint distance g₂ is preferably about 1 mm or more and about 6 mm or less. The outer yoke thickness T₂ is preferably about 2.5 mm or more and about 3.5 mm or less. These values are appropriate in practice in the case of a stator core (32) with a diameter of about 110 mm.

### (Other Shapes of Stator Core (32))

The configuration of the stator core (32), particularly the configuration of the beam portions (42), is not limited to that shown in FIGS. 3 and 4. The example in FIG. 3 is regarded as a first configuration example, and other configuration examples will be shown below.

### (Second Configuration Example)

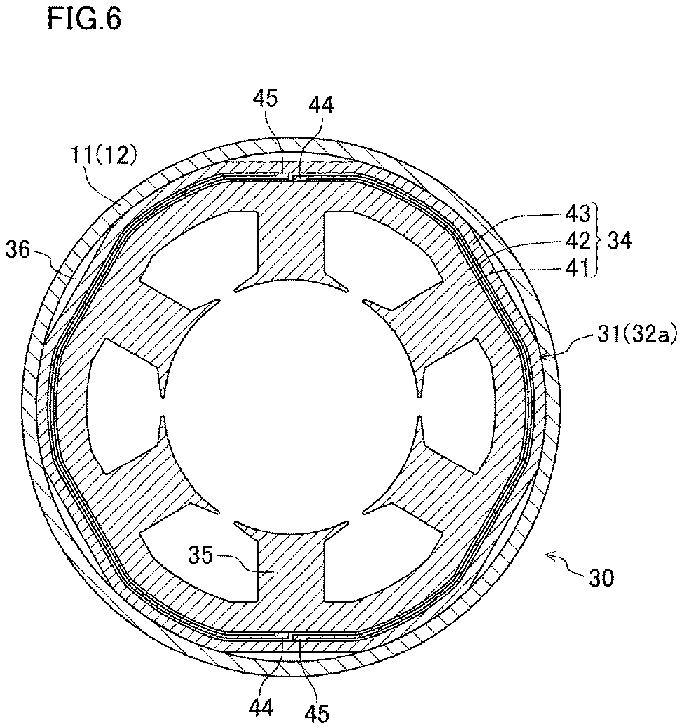

FIG. 6 shows a stator core (32a) of a second configuration example. The stator core (32a) has the same basic structure as the stator core (32) shown in FIG. 3, but the joining of the beam portions (42) is different. That is, the stator core (32a) is also provided with two beam portions (42) having the same length. However, unlike the case in FIG. 3, one of the beam portions (42) is joined to the inner yoke portion (41) at the upper portion by the inner joint portion (44), extends clockwise in the circumferential direction, and is joined to the outer yoke portion (43) at the lower portion by the outer joint portion (45). The other beam portion (42) is joined to the inner yoke portion (41) at the lower portion by the inner joint portion (44), extends clockwise in the circumferential direction, and is joined to the outer yoke portion (43) at the upper portion by the outer joint portion (45).

In this manner, the stator core (32a) of the second configuration example, in which the beam portions (42) are joined in the reverse manner from those in the stator core (32) in FIG. 3, also exhibits the advantage of the present disclosure, such as a reduction in vibration.

### (Third Configuration Example)

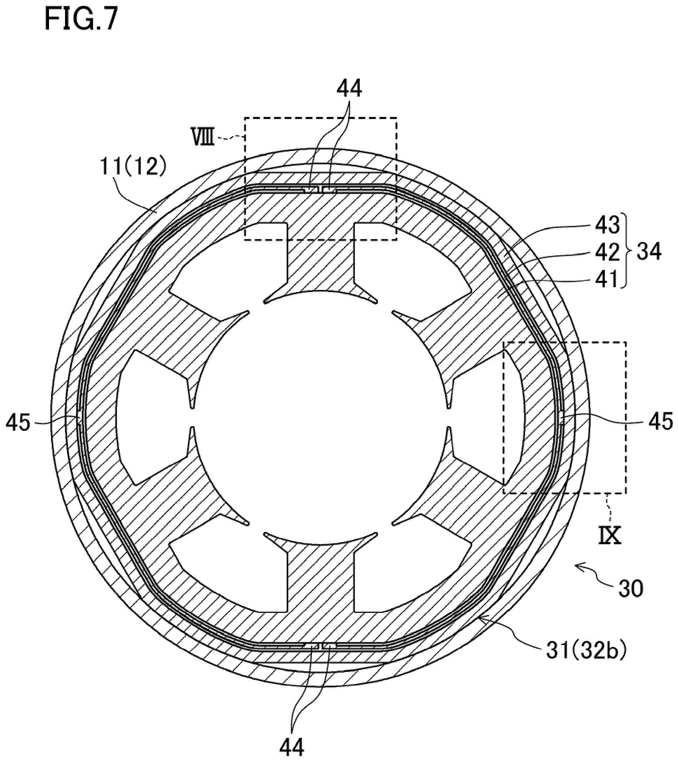

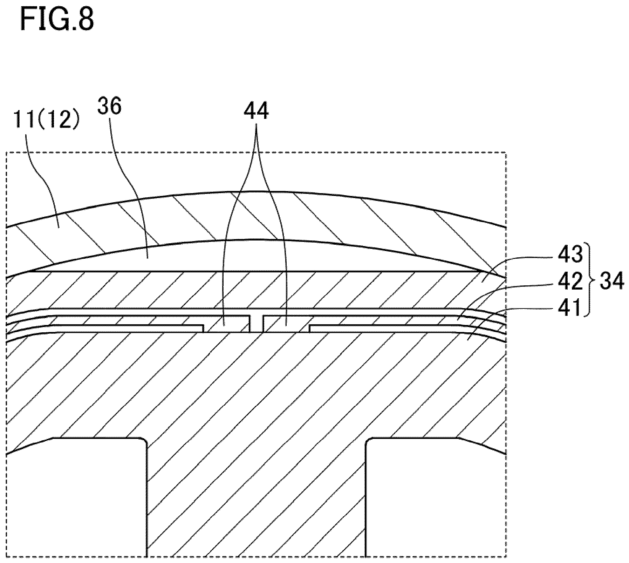

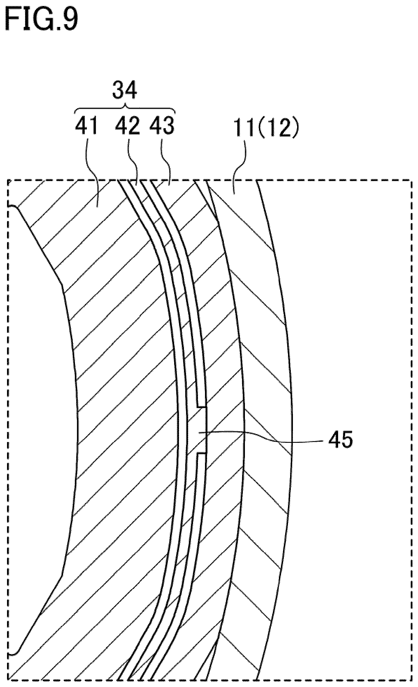

FIG. 7 shows a stator core (32b) of a third configuration example. The part VIII in FIG. 7 is shown in an enlarged manner in FIG. 8, and the part IX in FIG. 7 is shown in an enlarged manner in FIG. 9. The stator core (32b) has the same basic structure as the stator core (32) shown in FIG. 3, but the joining of the beam portions (42) is different.

The stator core (32b) is also provided with two beam portions (42) having the same length. In FIG. 7, both of the two beam portions (42) are joined to the inner yoke portion (41) at the upper portion (i.e., the part VIII in FIG. 8) by the inner joint portions (44), extend clockwise and counterclockwise in the circumferential direction, and are joined again to the inner yoke portion (41) at the lower portion by the inner joint portions (44). That is, both ends of each beam portion (42) are joined to the inner yoke portion (41) by the inner joint portions (44). In addition, middle portions, i.e., right and left portions in FIG. 7, of the beam portions (42) are joined to the outer yoke portion (43) by the outer joint portions (45). FIG. 9 shows an enlarged view of the part IX near the outer joint portion (45).

The stator core (32b) having the inner yoke portion (41) and the outer yoke portion (43) joined together by the beam portions (42) in such a configuration, also exhibits the advantage of the present disclosure, such as a reduction in vibration.

### (Fourth Configuration Example)

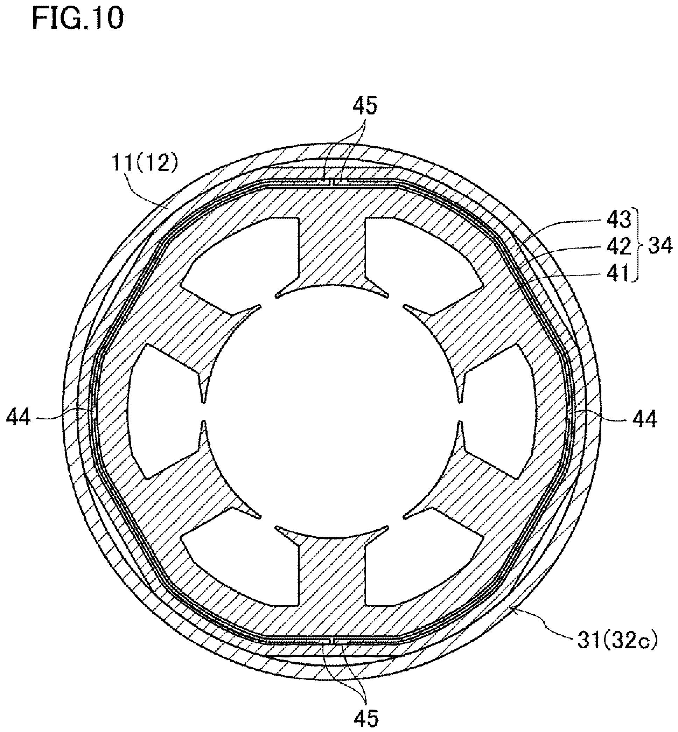

FIG. 10 shows a stator core (32c) of a fourth configuration example. The stator core (32c) has the same basic structure as the stator core (32b) shown in FIG. 7, but the joining of the beam portions (42) is different.

The stator core (32c) is also provided with two beam portions (42) having the same length. The inner joint portion (44) and the outer joint portion (45) are arranged in the reverse manner from those in the stator core (32b) shown in FIG. 7.

More specifically, both of the two beam portions (42) are joined to the outer yoke portion (43) at the upper portion by the outer joint portions (45), extend clockwise and counterclockwise in the circumferential direction, and are joined again to the outer yoke portion (43) at the lower portion by the outer joint portions (45). That is, both ends of each beam portion (42) are joined to the outer yoke portion (43) by the outer joint portions (45). In addition, middle portions, i.e., right and left portions in FIG. 10, of the beam portions (42) are joined to the inner yoke portion (41) by the inner joint portions (44).

The stator core (32c) having the inner yoke portion (41) and the outer yoke portion (43) joined together by the beam portions (42) in such a configuration, also exhibits the advantage of the present disclosure, such as a reduction in vibration.

### (Fifth Configuration Example)

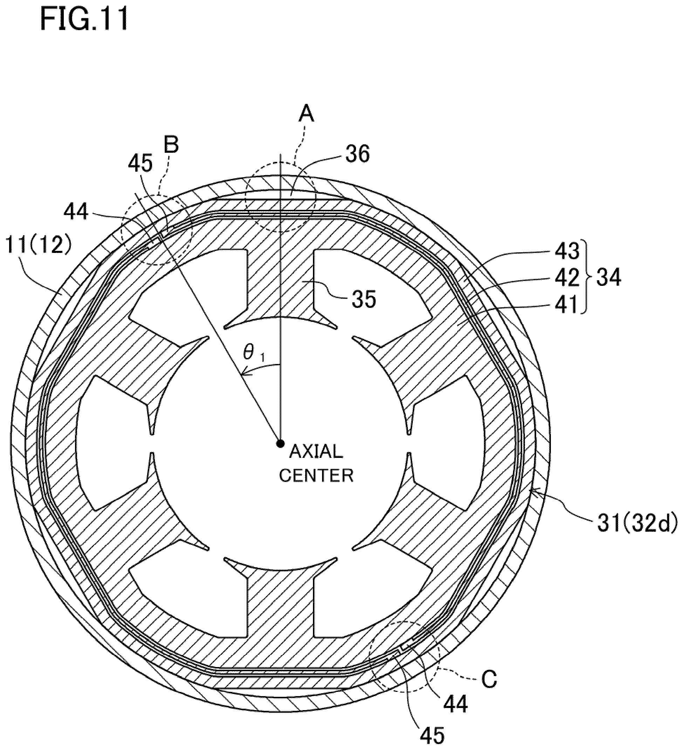

FIG. 11 shows a stator core (32d) of a fifth configuration example. The stator core (32d) has the same basic structure as the stator core (32a) shown in FIG. 4, but the joining of the beam portions (42) is different. That is, the stator core (32d) is also provided with two beam portions (42) having the same length. Each of the beam portions (42) includes an inner joint portion (44) at one end, and an outer joint portion (45) at the other end.

In the stator core (32d) in FIG. 11, the ends of the beam portions (42) are located in the area B between the core cuts (36). In this point, the stator core (32d) is different from the stator core (32a) in FIG. 3, in which the ends of the beam portions (42) are provided in the area A corresponding to one of the core cuts (36).

In FIG. 11, the ends of the beam portions (42) (the inner joint portion (44) of one beam portion (42) and the outer joint portion (45) of the other beam portion (42)) are provided at a position forming an angle θ₁ in the counterclockwise direction with respect to the center of one of the core cuts (36). Since this example includes six core cuts (36), the angle θ₁ of the middle point between the core cuts (36) corresponds to 30°. However, the number of the core cuts (36) is not limited to six, and the angle θ₁ is not limited to this value. The ends of the beam portions (42) may be disposed at a position other than the middle point between the core cuts (36). In this case, the angle θ₁ may take any value.

It can be said that the stator core (32d) has a configuration in which the position of the ends of the beam portions (42) of the stator core (32) in FIG. 3 is shifted by the angle θ₁. On the other hand, the position of the ends of the beam portions (42) may be shifted by the angle θ₁ in each of the stator cores of the other configuration examples shown in FIGS. 6, 7, and 10.

The value of θ₁ can be determined in view of the vibration reduction effect or the like.

Since the example in FIG. 11 has two beam portions (42) having the same length, the other inner joint portion (44) and the other outer joint portion (45) are arranged at the opposite position with respect to the axial center. Each beam portion (42) extends along about half the circumference of the inner yoke portion (41), and the angle formed by both ends with respect to the axial center is about 180°. This angle is slightly less than 180° since there is the inter-joint distance g₂ between the ends of the beam portions (42) in the circumferential direction (FIG. 4).

### (Sixth Configuration Example)

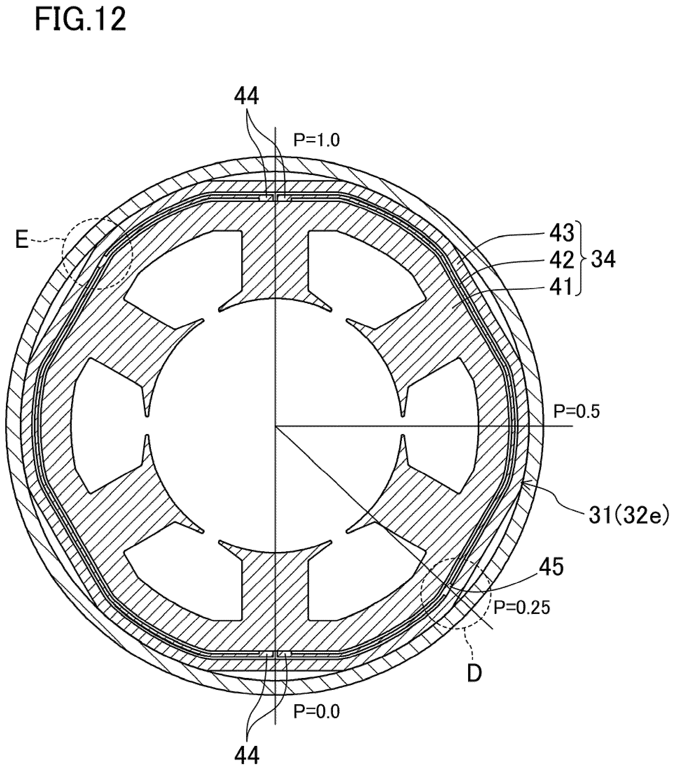

FIG. 12 shows a stator core (32e) of a sixth configuration example. The stator core (32e) has the same basic structure as the stator core (32b) shown in FIG. 7, but the joining of the beam portions (42) is different.

The stator core (32e) is also provided with two beam portions (42) having the same length, and each of the beam portions (42) is joined to the inner yoke portion (41) at both ends (the upper and lower portions in FIG. 12) by the inner joint portions (44). However, the outer joint portion (45) is located at a position deviated from the middle of the beam portion (42).

The positions are expressed using P = 0.0 as one end and P = 1.0 as the other end of the beam portion (42). In FIG. 12, of the two beam portions (42), values P of the right beam portion (42) are shown counterclockwise using P = 0.0 as the lower portion and P = 1.0 as the upper portion. In the stator core (32e) in FIG. 12, the outer joint portion (45) is provided in the area D of P = 0.25. Accordingly, the distance from the inner joint portion (44) at P = 0.0 to the outer joint portion (45) is about one fourth the length of the beam portion (42), and the distance from the outer joint portion (45) to the inner joint portion (44) at P = 1.0 is about three fourth the length of the beam portion (42). Although the numerical values are not shown, the outer joint portion (45) is provided in the area E corresponding to P = 0.25 for the left beam portion (42) in FIG. 12 as well.

It can be said that the stator core (32e) in FIG. 12 has a configuration in which the position of the outer joint portion (45) is changed from the middle portion of the beam portion (42) in the stator core (32b) in FIG. 7. On the other hand, the position of the inner joint portion (44) in the stator core (32c) in FIG. 10 may be shifted from the middle portion of the beam portion (42).

The value of P can be determined in view of the vibration reduction effect or the like. P is preferably about 0.5. That is, the inner joint portion (44) or the outer joint portion (45) provided at a position other than both ends of each beam portion (42) is provided preferably at a middle portion of the beam portion (42). The value of P is preferably the same among a plurality of beam portions (42) in view of reducing vibration, for example.

### (Seventh Configuration Example)

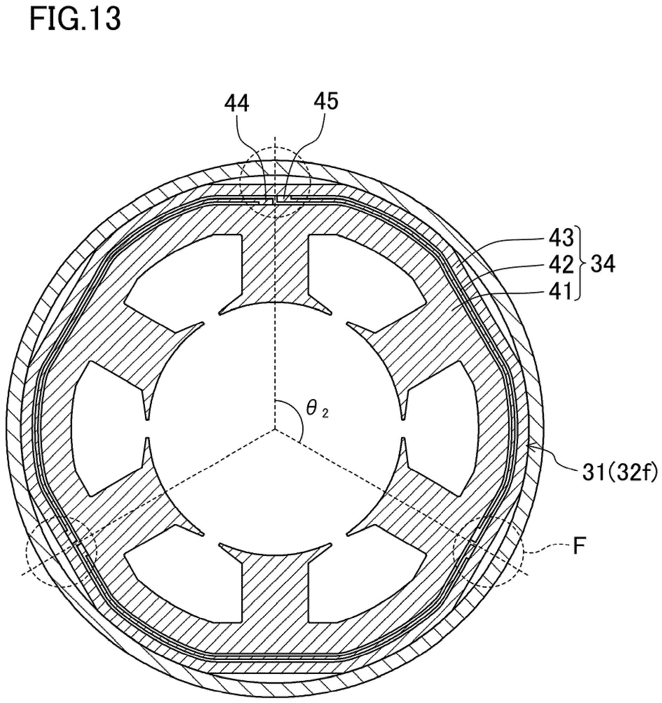

FIG. 13 shows a stator core (32f) of a seventh configuration example. The stator core (32f) has the same basic structure as the stator core (32) shown in FIG. 3, but the beam portions (42) are different.

That is, the stator core (32f) includes three beam portions (42) having the same length. Accordingly, the ends of the beam portions (42) are located at positions (i.e., the areas F indicated by the broken circles) dividing the stator core (32f) into three equal parts with respect to the axial center. Each beam portion (42) is joined at one end to the inner yoke portion (41) by the inner joint portion (44) and j oined at the other end to the outer yoke portion (43) by the outer joint portion (45). If the angle formed by both ends of each beam portion (42) with respect to the axial center is referred to as θ₂, then θ₂ is about 120°. The angle is slightly smaller than 120° since there is the inter-joint distance g₂ between the ends of the beam portions (42) in the circumferential direction (see FIG. 4).

The number of the beam portions (42) may be other numbers. For example, if there are six beam portions (42), θ₂ is slightly smaller than 60°. The angle θ₂ is preferably 50° or more in view of reducing vibration, for example.

### (Eighth Configuration Example)

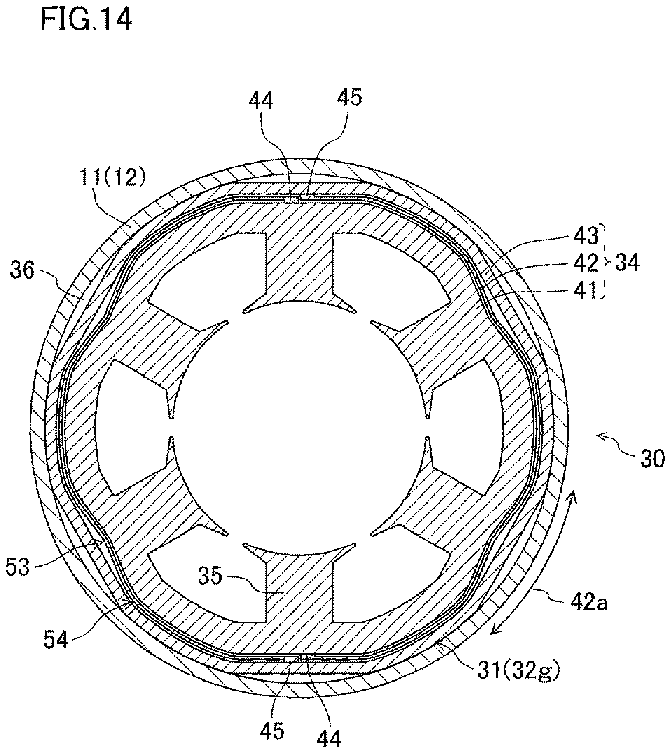

FIG. 14 shows a stator core (32g) of an eighth configuration example. The stator core (32g) has the same basic structure as the stator core (32) shown in FIG. 3. That is, two beam portions (42) having the same length are provided between the inner yoke portion (41) and the outer yoke portion (43). Each of the beam portions (42) includes an inner joint portion (44) at one end in the circumferential direction, and an outer joint portion (45) at the other end.

The stator core (32g) in FIG. 14 includes, between the inner joint portion (44) and the outer joint portion (45), bent areas (42a) each made of bent portions arranged in the circumferential direction, and the bent portions include a first bent portion (53) raised with respect to the inner yoke portion (41) and a second bent portion (54) recessed with respect to the inner yoke portion (41).

In the example in FIG. 14, the inner joint portion (44) and the outer joint portion (45) are arranged at the positions corresponding to two opposed tooth portions (35) (i.e., the upper and lower tooth portions (35) in the figure) of the six tooth portions (35), and the outer circumference of the inner yoke portion (41) is recessed inward at portions corresponding to the other four tooth portions (35). Each of these recesses is in an isosceles triangular shape whose apex angle pointing toward the inner yoke portion (41) is obtuse, and the corresponding beam portion (42) is also recessed inward to follow the shape. This is achieved by forming the first bent portion (53) and the second bent portion (54) in the beam portion (42) to serve as the bent area (42a).

Such a bent area (42a) of the beam portion (42) constitutes a spring structure, which increases torsional rigidity. This increases the effect of reducing vibration in the axial direction as compared to a case without a spring structure. As a result, the stator core (32g) exhibits a significant effect of reducing the propagation of vibration from the core portion to the casing (11) in each of the radial direction, the circumferential direction, and the axial direction.

### (Ninth Configuration Example)

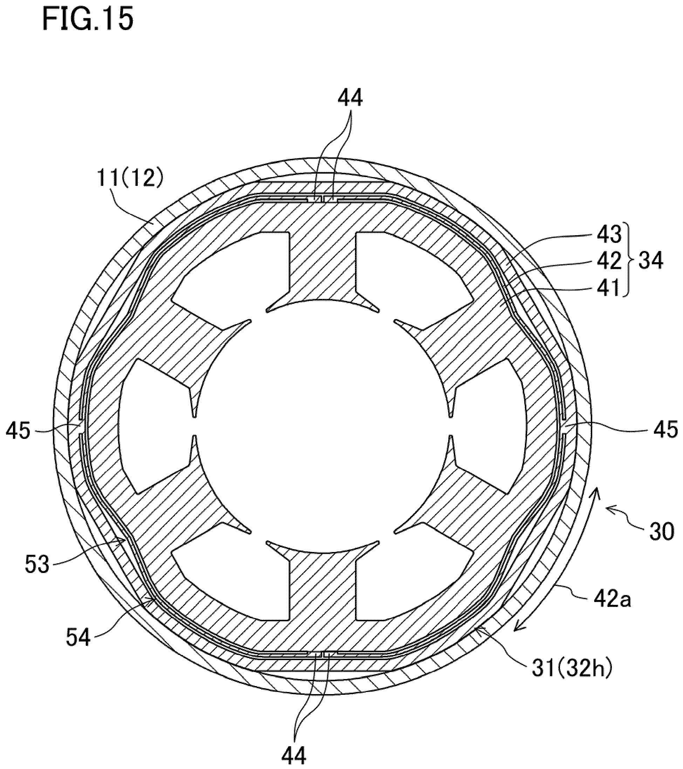

FIG. 15 shows a stator core (32h) of a ninth configuration example. The stator core (32h) has the same basic structure as the stator core (32b) shown in FIG. 7. That is, two beam portions (42) having the same length are provided between the inner yoke portion (41) and the outer yoke portion (43). Each beam portion (42) is joined to the inner yoke portion (41) at both ends (i.e., the upper and lower portions in FIG. 15) by the inner joint portion (44) and j oined to the outer yoke portion (43) at the middle portion (i.e., the right or left in FIG. 7) by the outer joint portion (45).

The stator core (32h) in FIG. 15 includes, between the inner joint portion (44) and the outer joint portion (45), bent areas each made of bent portions arranged in the circumferential direction, and the bent portions include a first bent portion (53) raised with respect to the inner yoke portion (41) and a second bent portion (54) recessed with respect to the inner yoke portion (41). This is the same as the stator core (32g) of the eighth configuration example shown in FIG. 14.

In the ninth configuration example as well, the bent area (42a) made of the first bent portion (53) and the second bent portion (54) arranged next to each other constitutes a spring structure, which increases the torsional rigidity and hence increases the effect of reducing vibration in the axial direction.

In FIGS. 14 and 15, an example is shown in which the recess of the outer circumference of the inner yoke portion (41) is in an isosceles triangular shape whose apex has an obtuse angle. However, the recess may have another shape, such as a continuous arc shape.

### (Tenth Configuration Example)

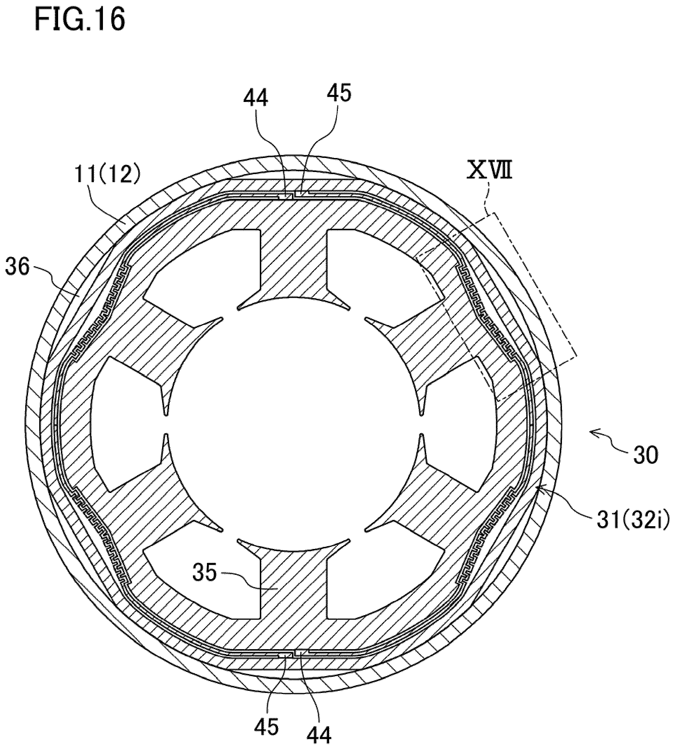

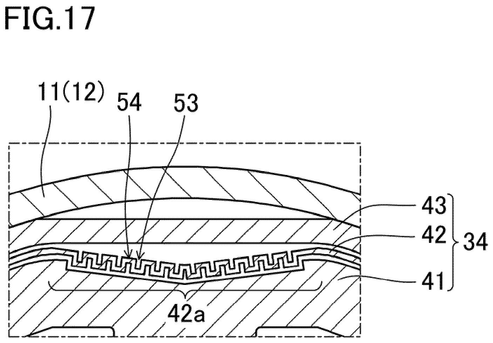

FIG. 16 shows a stator core (32i) of a tenth configuration example. FIG. 17 is an enlarged view of a part XVII shown in FIG. 16. The stator core (32i) has the same basic structure as the stator core (32) shown in FIG. 3. That is, two beam portions (42) having the same length are provided between the inner yoke portion (41) and the outer yoke portion (43). Each of the beam portions (42) includes an inner joint portion (44) at one end in the circumferential direction, and an outer joint portion (45) at the other end.

In the example in FIG. 16, the inner joint portion (44) and the outer joint portion (45) are arranged at the positions corresponding to two opposed tooth portions (35) (i.e., the upper and lower tooth portions (35) in the figure) of the six tooth portions (35), and the outer circumference of the inner yoke portion (41) is recessed inward at portions corresponding to the other four tooth portions (35). At each of the recesses, the corresponding beam portion (42) has a bent area (42a) that is bent in a rectangular wave shape. In the bent area (42a), the beam portion (42) has a structure in which a first bent portion (53) raised in a rectangular U shape with respect to the inner yoke portion (41) and a second bent portion (54) recessed in a rectangular U shape with respect to the inner yoke portion (41) are arranged in the circumferential direction.

Such a bent area (42a) has a large number of first bent portions (53) and second bent portions (54), and therefore serves as a spring structure that exhibits a significant spring effect. Thus, the torsional rigidity is increased by the spring structure, thereby exhibiting the effect of reducing vibration in the axial direction more significantly.

In FIGS. 16 and 17, the rectangular wave shape structure is shown as an example. However, another shape, such as a triangular wave shape, a sine wave shape, and a continuous arc shape, may be employed.

### (Other Configuration Examples and Combinations)

In the above first to tenth configuration examples, the plurality of beam portions (42) have the same length, and the shape of the stator core (32), for example, is a rotationally symmetrical shape. This is a preferable configuration in order that the vibration reduction effect or the like is exhibited. It is however possible to provide beam portions (42) with different lengths for other reasons. It is also possible to arrange the inner joint portion (44) and the outer yoke portion (43) asymmetrically, but a configuration with a greater degree of symmetry is preferable.

In each of the above examples, the outer circumference of the inner yoke portion (41) where the inner joint portion (44) is arranged, or the inner circumference of the outer yoke portion (43) where the outer joint portion (45) is arranged is linear, but is not limited thereto. These portions may be recessed inward in the radial direction, for example, in order to increase the flow path area for a refrigerant.

The arrangement, number, and other characteristics of the recesses and the bent areas (42a) of the inner yoke portion (41) in the eighth to tenth configuration examples are not limited to those described above. For example, in FIG. 14, each beam portion (42) has two bent areas (42a), which is desirable for the effect of reducing vibration in the axial direction. However, the bent area (42a) may be provided at only one of these positions. If there are more than six tooth portions (35), it is selectable to which one of the tooth portions (35) the bent area (42a) is arranged to correspond.

In view of reducing the loss of the magnetic path, it is desirable to arrange the recess and the bent area (42a) of the inner yoke portion (41) at a portion corresponding to the tooth portion (35). The arrangement is however not limited thereto.

While the embodiments and various examples have been described above, it will be understood that various changes in form and details may be made without departing from the spirit and scope of the claims. The elements according to the embodiments, the variations thereof, and the other embodiments may be combined and replaced with each other.

The ordinal numbers such as "first," "second," "third," ... , described above are used to distinguish the terms to which these expressions are given, and do not limit the number and order of the terms.

### INDUSTRIAL APPLICABILITY

As described above, the present disclosure is useful for an electric motor for an air conditioner.

### DESCRIPTION OF REFERENCE CHARACTERS

1 Refrigeration Apparatus
10 Compressor
30 Electric Motor for Air Conditioner
32, 32a, 32b, 32c, 32d, 32e, 32f Stator Core
35 Tooth Portion
41 Inner Yoke Portion
42 Beam Portion
42a Bent Area
43 Outer Yoke Portion
44 Inner Joint Portion
45 Outer Joint Portion

## Claims

1. An electric motor (30) for an air conditioner, the electric motor (30) comprising: a rotor (40) configured to rotate freely about a rotary shaft; and a stator core (32, 32a, 32b, 32c, 32d, 32e, 32f, 32g, 32h, 32i) arranged outside the rotor (40),
the stator core (32, 32a, 32b, 32c, 32d, 32e, 32f, 32g, 32h, 32i) including:
an inner yoke portion (41) in an annular shape;
a tooth portion (35) extending inward from the inner yoke portion (41) in a radial direction;
an outer yoke portion (43) in an annular shape arranged outward of the inner yoke portion (41) in the radial direction;
a plurality of beam portions (42) extending in a circumferential direction between the inner yoke portion (41) and the outer yoke portion (43);
an inner joint portion (44) configured to join the inner yoke portion (41) and each of the beam portions (42) in the radial direction; and
an outer joint portion (45) configured to join the outer yoke portion (43) and each of the beam portions (42) in the radial direction.

2. The electric motor (30) of claim 1, wherein
each of the beam portions (42) is provided with the inner joint portion (44) at one end in the circumferential direction, and the outer joint portion (45) at the other end.

3. The electric motor (30) of claim 1, wherein
each of the beam portions (42) is provided with the inner joint portion (44) at each end in the circumferential direction and the outer joint portion (45) at a different position, or is provided with the outer joint portion (45) at each end in the circumferential direction and the inner joint portion (44) at the different position.

4. The electric motor (30) of claim 3, wherein
the outer joint portion (45) or the inner joint portion (44) at the different position is provided at a middle portion of each of the beam portions (42) in the circumferential direction.

5. The electric motor of any one of claims 1 to 4, wherein
an angle formed by both ends of one of the beam portions (42) in the circumferential direction with respect to a center of the stator core (32, 32a, 32b, 32c, 32d, 32e, 32f, 32g, 32h, 32i) is 50° or more.

6. The electric motor (30) of any one of claims 1 to 4, wherein
two, three, or six beam portions (42) are provided, and the beam portions (42) have a same length.

7. The electric motor (30) of any one of claims 1 to 6, wherein
each of the beam portions (42) includes, between the inner joint portion (44) and the outer joint portion (45), bent areas (42a) each made of a first bent portion (53) and a second bent portion (54) arranged in the circumferential direction, the first bent portion (53) being raised with respect to the inner yoke portion (41), the second bent portion (54) being recessed with respect to the inner yoke portion (41).

8. The electric motor (30) of any one of claims 1 to 7, wherein
each of the beam portions (42) includes a plurality of arc-shaped portions.

9. A compressor (10) comprising the electric motor (30) of any one of claims 1 to 8.

10. A refrigeration apparatus (1) comprising the compressor (10) of claim 9.
